Europäisches Patentamt

European Patent Office

Office européen des brevets

(19)

(11) Publication number: **0 165 535 B1**

(12) **EUROPEAN PATENT SPECIFICATION**

(45) Date of publication of patent specification: **11.09.91**  (51) Int. Cl.⁵: **G01N 21/47**

(21) Application number: **85107105.0**

(22) Date of filing: **10.06.85**

(54) Device for measuring light diffusely reflected from a nonuniform specimen.

(30) Priority: **19.06.84 US 622142**

(43) Date of publication of application:
**27.12.85 Bulletin 85/52**

(45) Publication of the grant of the patent:
**11.09.91 Bulletin 91/37**

(84) Designated Contracting States:
**DE FR GB IT SE**

(56) References cited:
**EP-A- 0 079 517**
**US-A- 3 473 878**
**US-A- 3 910 701**

**PATENT ABSTRACTS OF JAPAN, vol. 8, no.
163 (P-290)[1600], 27th July 1984; & JP - A -
59 60327**

(73) Proprietor: **MILES INC.**
**1127 Myrtle Street**
**Elkhart Indiana 46514(US)**

(72) Inventor: **Shaffer, Gerald H.**
**612 East Waterford**
**Wakarusa Indiana 46573(US)**

(74) Representative: **Kirchner, Dietrich, Dr. et al**
**c/o BAYER AG Konzernverwaltung RP Paten-
tabteilung**
**W-5090 Leverkusen, Bayerwerk(DE)**

## Description

BACKGROUND OF THE INVENTION

This invention relates to a device for measuring light diffusely reflected from an optically nonuniform specimen, such as a reagent test strip used for qualitative and quantitative analysis of body fluids in accordance with the preamble of Claim 1.

A color measuring device of this type has been disclosed in the Japanese Patent Application No. 57-171938 (Publication No. 59-60327). In particular, this device comprises light emitting diodes (LEDs) of different colors, the LEDs being arranged around the specimen at different azimuth angles in such a manner that LEDs of anyone color in pairs opposite one another can be sequentially turned on and off. The light from the surface to be tested is condensed by a lens and focused onto a photodetector. The signal light is electronically processed and evaluated to obtain reflectance values for three colors R, G, B.

A similar apparatus for measuring light reflectance absorption and/or transmission is also described in US 3,910,701. Again, the specimen is illuminated by a plurality of LEDs positioned around the specimen. The LEDs are alternately or sequentially energized at different light wavelengths and a light sensor measures the response to the various wavelengths. A difference between the measured light reflectance at the various wavelengths and the measured light transmission at the same wavelength is then determined to obtain a light absorption value.

The spectral characteristics of light reflected by a specimen are related to the color of the specimen. With the advent of instrumental analysis, the color of a specimen under test has become one of the most widely used bases for biochemical assay procedures. For example, a reagent test strip used for qualitative and quantitative analysis can be contacted for a prescribed period of time with a body fluid, such as blood or urine. The reflectance spectrum of the colored test strip will vary depending on the concentration of the target substance in the body fluid being examined. Thus, by photoelectrically measuring light reflected from the test strip and computing the resulting reflectance, the desired analysis can be made by correlation of reflectance to concentration.

A reagent test strip is typically a test paper treated with various chemical reagents. Since the surface of the test strip does not have a uniform topography, it is difficult to make accurate and reproducible measurements because the result may depend on where the measurement is made on the strip or on measurement geometry. One solution to this problem has been to provide substantially uniform illumination of the test strip using an integrating sphere or hemisphere interposed between the light source and the strip (see e.g. EP-A-00 79 517). While this solution has met with some success, the integrating sphere or hemisphere adds to the cost of the device and may increase its size.

In addition, some illumination from the light source is dissipated or lost when an integrating sphere or hemisphere is utilized. Thus, in order to obtain a desired magnitude of reflected energy, the magnitude of the illumination must be correspondingly increased to compensate for the light dissipated in the device. This can require a larger light source and can lead to increased power consumption.

It has also been found with reagent test strips that the reflectance measurement is sensitive to the orientation of the strip in the test strip holder. For example, slight twisting or inclination of the specimen affects the magnitude of the reflectance measurement. In addition, it has been found that the reflectance measurement can be affected by the distance between the test strip and the light source.

Thus, there exists a need in the art for a device for making rapid, accurate and reproducible light reflectance measurements from an optically nonuniform specimen under test. The device should employ direct illumination of the specimen to eliminate the need for an integrating sphere or hemisphere. The device should minimize the amount of illumination dissipated or lost between the light source and the specimen in order to minimize power consumption. The device should provide reflectance measurements that are less sensitive to subtle changes in the orientation of the specimen in the specimen holder and less susceptible to variations in the distance between the light source and the specimen. In addition, the device should be capable of compensating for changes in performance of components in the device, especially changes in illumination of the specimen.

SUMMARY OF THE INVENTION

Accordingly, this invention provides a device as claimed in claim 1. Such a device can make accurate, reproducible light reflectance measurements on an optically nonuniform specimen. The device comprises means for holding an optically nonuniform specimen, having an irregularly reflecting surface with regard to the azimuth angle in a fixed position. At least two pairs of light sources provide direct illumination of the specimen. Each pair comprises first and second light sources, being about 179° to about 181° apart in azimuth and each light source in a pair is capable of emitting monochromatic light within a wavelength range of from about 550 nm to about 940 nm. Each of the light sources of a respective pair has a longitudinal axis that forms an acute angle with the specimen surface, the acute angles being substantially equal. The light sources of each pair are simultaneously energized for periods not exceeding about 300 milliseconds and then deenergized to obtain incident beams having substantially equal duration. Further, means are provided for controlling the inputs to the first and second light sources of a respective pair to maintain substantially equal reflected energy of the incident beams, the difference in the reflected energy of said incident beams being within ±2.5%.

According to a preferred embodiment of the invention the acute angles between the longitudinal axis of the light sources and the specimen surface are about 40° to about 50° and, in particular, about 44° to about 46°.

BRIEF DESCRIPTION OF THE DRAWINGS

This invention will be more fully understood by reference to the drawings in which:
Figure 1 is a cross-sectional view of a light source and specimen under test for illustrating the principle of the optical beam configuration;
Figure 2 is a plan view of the light source and specimen shown in Figure 1;
Figure 3 is a plan view of the reflectance measuring device of this invention having multiple pairs of light sources;
Figure 4 is a schematic diagram of apparatus for controlling light sources employed in this invention;
Figure 5 is a logic diagram of means for equalizing the output from light sources in the device of the invention; and
Figure 6 is a schematic diagram of apparatus for processing a signal from a detector in the device of this invention.

DETAILED DESCRIPTION

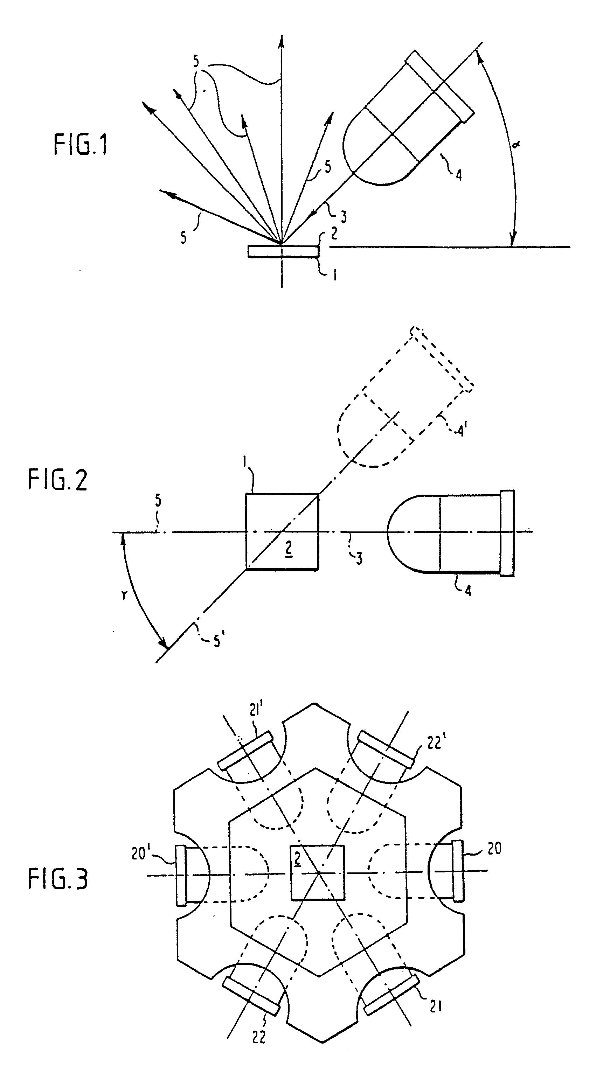

The device and method of this invention can be employed for measuring light diffusely reflected from an optically nonuniform specimen of essentially any type. As used herein, the expression "optically nonuniform specimen" means a specimen or a portion thereof that appears substantially flat to the unaided eye, but when a surface of the specimen is illuminated by a light source at a fixed elevation and spectral reflectance from the surface is measured, the mechanical nature of the surface is such that the reflectance measurement is a function of the azimuth angle. This definition can be more readily understood by reference to Figures 1 and 2 and the following descriptions of an optically uniform specimen and an optically nonuniform specimen.

Figure 1 shows a specimen 1 having a surface 2 illuminated by an incident beam of light 3 from a light source 4 which is at a fixed elevation with respect to the plane of surface 2. Light source 4 has a longitudinal axis that corresponds with the longitudinal axis of light beam 3. The angle of incidence of the light source 4 with respect to the surface 2 is identified as $\alpha$. The incident beam 4 is scattered from the surface 2 as diffusely reflected energy 5.

Figure 2 is a top view of the arrangement shown in Figure 1. The incident beam of light 3 from illumination source 4 reflects from surface 2 as reflected beam 5. In the case of an optically nonuniform specimen, the spectral reflectance produced by source 4 at a fixed angle of incidence will change if the light source 4 is moved from the position shown in solid lines in Figure 2 to the position shown in phantom in Figure 2. This change in position is defined by the azimuth angle $\gamma$ and thus, in the case of an optically nonuniform specimen, the spectral reflectance is a function of the azimuth angle. In the case of an optically uniform specimen, however, the spectral reflectance is unaffected by movement of the light source 4 to the position shown in phantom, provided that, in each position the source 4 is at the same angle of incidence ($\alpha$) to the surface 2.

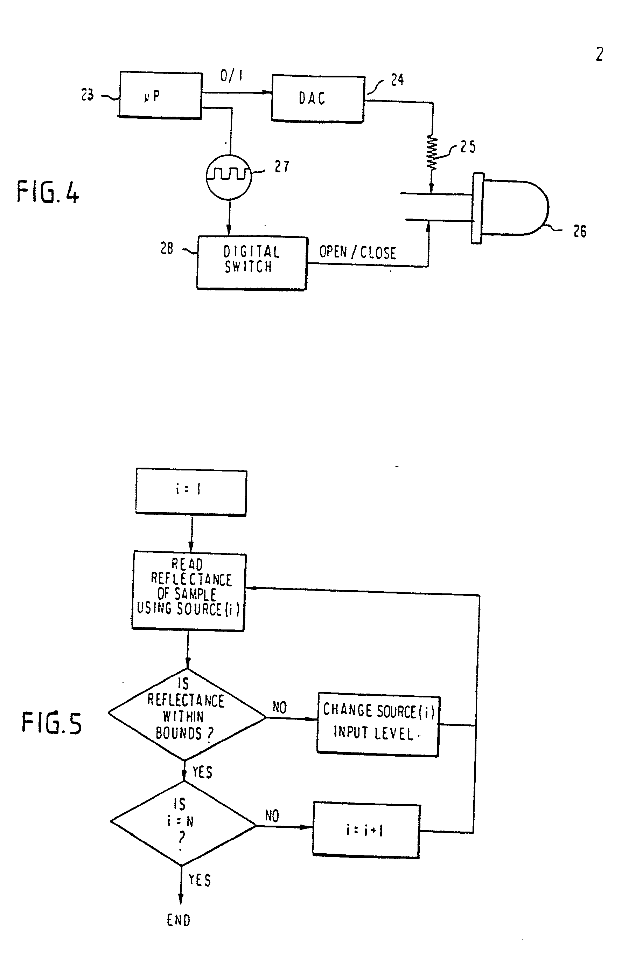

The device of this invention will now be described in connection with the measurement of reflectance from a reagent test strip for purposes of color identification in accordance with Figures 3 to 6.

Referring to Figure 3, the surface 2 of specimen 1 is illuminated by opposing light sources that are arranged in pairs designated 20-20', 21-21' and 22-22'. It is apparent from Figure 3 that the two light sources in each pair are arranged 180° apart in azimuth. In addition, the two light sources in each pair are at substantially the same angle $\alpha$ of incidence with respect to the top surface 2. The two light sources in each pair are capable of providing a beam of monochromatic light of the same wavelength, but all of the light source pairs need not provide the same wavelength of light. Thus, for example, while the light beams from light sources 20 and 20' each have the same wavelength, this wavelength need not be the same as the wavelength of the light beams provided by sources 21 and 21'. Similarly, light sources 22 and 22' provide light beams of the same wavelength, but this wavelength need not be the same as the wavelength provided by light sources 20 and 20' or 21 and 21'.

The two light sources in each pair are simultaneously energized and deenergized and each pair of light sources in Figure 3 is energized and deenergized in sequence so that the surface 2 of specimen 1 is periodically illuminated by pulses of light from the two sources in each pair. The resulting pulses of reflected light 15 are collected by photodetector 17 where they are converted to electrical signals. The signals are processed, and the reflectance from the optically nonuniform specimen is computed.

The various components in the apparatus of this invention will now be described in more detail.

The device of this invention contains N light sources, where N is even, and two or more. The upper limit to the number of light sources is generally not critical in practicing this invention. Nevertheless, the number of light sources may be limited by practical considerations, such as cost and physical constraints. Generally, the number of light sources will not exceed about 200. When a large number of light sources is employed, it may be necessary to space some or all of the sources at a distance from the specimen and to use light focussing means or a light guiding arrangement, such as fiber optics, to transmit the light from the source to the specimen. Up to about twenty light sources, for example ten pairs, can typically be spaced close enough together without providing light guiding means. While the number of light sources and the geometry of the placement of pairs of light sources around the specimen can be adapted to each application, in the preferred embodiment of this invention, six light sources (three pairs) are symmetrically arranged and substantially uniformly spaced around the specimen (see Figure 3).

The angle ($\alpha$) of incident light on the surface of the specimen under test can be varied depending upon the nature of the specimen, the nature of the light sources, the nature of the detector and related circuitry for processing the signal from the detector and the degree of accuracy required in the measurement. If the incident angle is too great, specular reflection collected by the photodetector will be too high, thus making it difficult or impossible to resolve the signal from the detector into the diffusely reflected components that will indicate the tone of coloration. If the elevation angle is too low, insufficient illumination will be collected by the detector and the signal from the detector may be too low or unreliable. It has been found that the angle of elevation can be about $40°$ to about $50°$ when measurements are made on reagent test strips. Preferably, the angle of incident light will be about $44°$ to about $46°$ for reagent test strips, which is generally adequate to allow for manufacturing tolerances in the device. In the particularly preferred embodiment of this invention, the longitudinal axis of each light source forms an angle ($\alpha$) of substantially $45°$ with the surface 2. The incident light from each of the two light sources in a light source pair makes substantially the same angle with the surface of the specimen, but small deviations in these angles within the foregoing ranges can be tolerated.

Not all of the pairs of light sources need to be at the same incident angle relative to the surface under test. For example, the incident angle of each of the two light sources in one pair could be about $44°$ and the incident angle of each of the two light sources in another pair about $46°$. This arrangement may make it possible to space the light sources closer together and thereby employ more light source pairs in the device.

Since the light sources are at an inclined angle relative to the surface under test, elliptical illumination patterns are formed. If the incident beams from the light sources are focussed on a small, concentrated spot on the surface, the detector will have to be carefully aimed at the spot and the acceptable tolerance in deviation in incident angles will be small. For these reasons, and because low cost, commercially available light sources produce broad illumination patterns, it has been found advantageous to illuminate a large area of the surface and to focus the detector on a small portion of this area. In the preferred embodiment, the complete reagent area of a reagent test strip is illuminated and the detector is focussed on a small portion of the area by placing apertures between the surface and the detector.

Each light source in a pair projects light onto the surface 2 of specimen 1. Under ideal conditions, the two illumination patterns are superimposed to form a homogeneous pattern of light and a homogeneous reflected beam 15.

The azimuth angle can be varied depending upon the number of light sources (i.e., N) and the degree of accuracy required in the measurement. In one embodiment of the invention the light sources are arranged about

$$\frac{360°}{N}$$

apart in azimuth. Thus, for example, 6 light sources are arranged about 60° apart and 4 light sources about 90° apart. When making reflectance measurements on reagent test strips, deviations in azimuth angles of ± 1° are generally acceptable, and these deviations are usually sufficient to allow for manufacturing tolerances in the device. Thus the azimuth angle can be conveniently espressed as

$$\left(\frac{360°}{N} \pm 1°\right).$$

The azimuth angle can be varied depending upon the degree of accuracy required in the measurement. If the azimuth angle deviates from 180°, the illumination patterns will not be superimposed, and in the extreme case, two separate illumination spots can form. The detector 17 receives energy from only a small area of the surface of the specimen. Thus, if the illumination patterns diverge from a homogeneous spot of light, a false reflectance reading can result. This could occur, for example, if there was a dark area between the diverging patterns or if the detector collected more of the reflected light from one source than from the other. When making reflectance measurements on reagent test strips, the azimuth angle between the two light sources in a pair is between about 179° to about 181°, which is generally sufficient to allow for manufacturing tolerances in the device. In the preferred embodiment of this invention, the azimuth angle between light sources in a pair is about 180° in order to maximize the accuracy of the reflectance measurement.

The light source is capable of producing a reflected beam of monochromatic light in the region of the electromagnetic spectrum to which the specimen and the detector respond. While the light sources can be selected so that they all produce reflected light of the same wavelength, it is only required that the reflected beam from the two light sources in each light source pair be of substantially one wavelength. Light in the visible region of the spectrum is generally employed; this light is especially well suited for measuring reagent test strips.

The light sources are capable of emitting light having a wavelength of about 550 nanometers (nm) to about 940 nm, preferably about 550 nm to about 660 nm. In the embodiment depicted in Figure 3, the three pairs of light sources emit light having wavelengths of about 557 nm, about 610 nm and about 660 nm, respectively.

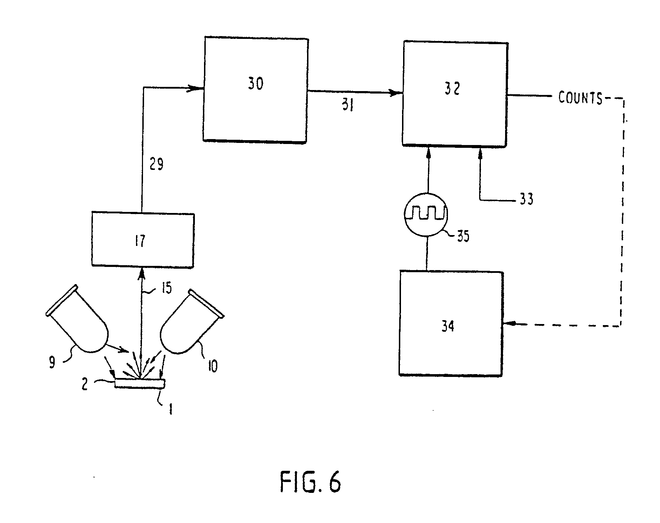

The use of light-emitting semiconductor devices, such as light-emitting diodes (LEDs), has been found to be particularly advantageous in this invention. Light-emitting diodes capable of emitting diffuse, monochromatic light are commercially available in the wavelength ranges previously described. The light-emitting diodes are of low cost, have low power requirements and high radiance and can be directly modulated at high rates. In addition, they are typically available in small sizes, which makes it possible to arrange multiple pairs of LEDs around the work holder without the use of light guiding means, such as fiber optic bundles. Exemplary LEDs are those based on GaAlAs, GaP, GaAsP/GaP and equivalent chip materials. In the preferred embodiment depicted in Figure 5, monochromatic illumination is provided by six high efficiency light-emitting diodes of the Stanley ESAA-, ESBR- and ESBG-5531 Series available from Stanley Electric Co., Ltd.

The light sources can comprise means emitting polychromatic light, there being provided means for separating all but the light of substantially one wavelength so that monochromatic light is emitted from the source. This can typically be accomplished with a tungsten lamp and a suitable filter interposed between the lamp and the surface of the specimen under test.

The specimen is held in a fixed position while reflectance is being measured, but can be moved to permit scanning of the surface or the measurement of reflectance from a different area of the specimen.

It is important that the output from each light source be stable in order to obtain accurate and reliable reflectance measurements because changes in output of the light source are indistiguishable to the detector from changes in reflected energy from the specimen. In some cases, it is even necessary to make several readings over the surface of the specimen, and in this event, it is also important that the output of each light source be stable while each reading is being taken. For example, a reagent test strip is frequently provided with several different reagents for making several different biochemical assays at one time, and it is important that the output from each light source be stable while the color of each reagent is being determined. By energizing and deenergizing the pairs of light sources so that the light sources in a pair are turned on and off at the same time, light pulses are generated. Stable, reproducible output from each light source can be obtained by pulsing the sources in this way.

The light pulses are generated by feeding to the light sources pulses of electric current having a duration sufficient to obtain the stable, reproducible output. The duration of each pulse will depend upon the nature and operating characteristics of the source and the speed of response of other components of the device. Pulsing can be accomplished by switching and timing means operable such that a selected light source or any combination of selected pairs of light sources are energized and deenergized. For instance, stable output can generally be obtained with LEDs energized for about 100 to about 300 milliseconds. In order to minimize the adverse effects of the heat, the duration of energization of the light source will typically be reduced at higher input currents. The duration of the on-off cycles for the light sources in a pair will be substantially equal.

Referring to Figure 3, all of the pairs of light sources can be pulsed at the same time or selected pairs can be pulsed in sequence. For example, light source pairs of the same wavelength can be pulsed simultaneously or in sequence. On the other hand, light source pairs of different wavelenghts will generally only be sequentially pulsed because of the difficulty in separating the reflected beam 15 into monochromatic components at the detector. The order in which the pairs of light sources are pulsed has not been found to be critical.

Figure 4 is a schematic diagram of an apparatus for controlling the on-off cycle and output of each light source by means of a microprocessor (µP) 23. Digital signals (0/1) are sent through a digital to analog converter (DAC) 24, the output 25 of which powers the light source 26. The microprocessor 23 also controls a timer 27 connected to digital switch 28, which opens and closes to turn the light source on and off for the required duration. The resulting pulses of light should be of sufficient duration for the electronic and optical components of the device to respond, but not so long that variations caused by instability in the light sources adversely affect the accuracy of measurement. Each light source can be pulsed more than one time, if desired, and the pulse cycle can be repeated as needed.

The duration of the pulse of electric current can be varied over a wide range. For example, the light sources of a particular wavelength may have low output or the detector may not have the same sensitivity to each of the different wavelengths of reflected light being measured. Thus, for example, the duration of the pulses to the light sources in one pair can be different than the duration of pulses to the light sources in another pair of different wavelength.

The intensities of the light beams from the light sources can also be varied over a wide range. Ordinarily, the desired magnitude of the energy reflected from the specimen will be established based upon the sensitivity of the detector and nature of the circuitry for processing the signal from the detector. The intensities of the light beams should be adequate to provide a reflected beam of at least the desired magnitude under the test conditions so that it is possible to discriminate between changes in color in the specimen. The intensity of each light beam can be controlled by regulating input current to the source. The input current will vary depending on the nature of the light source and its operating characteristics. For example, in the embodiment shown in Figure 3, each light source is an LED energized by a 20 milliamp input current. The light sources having a 557 nm wavelength produce a 12 to 18 millicandela (mcd) output, the light sources having 610 nm wavelength produce a 20 to 30 mcd output and the light sources having a 660 nm wavelength produce a 32 to 48 mcd output when reagent test strips are being measured. Thus, it will be evident that the intensity of the incident beams can vary from one light source pair to another, such as where the pairs produce monochromatic light of different wavelengths.

The output from each light source must not only be stable, but the contribution of each of the two light sources in a pair of light sources to the total reflected energy must be substantially equal to insure accurate, reproducible measurements. When measuring reagent test strips, the difference between LEDs of a pair should typically be within about ± 2.5%. Because the output of commercially available light sources can vary by as much as ± 50% and because the output of each source can change depending upon varying rates of degradation, means can be included in the device for periodically measuring the reflected energy due to each source and then increasing or decreasing the input to the source as needed to obtain the desired level. Acceptable matching of the light sources can be achieved by measuring the energy from each source that is reflected by the specimen under test and then making the appropriate adjustment to the input. Light source output fluctuations could be monitored by placing a reference detector such that it intercepts a portion of the beam from the light source and provides appropriate feedback to vary the input, but this requires a reference detector for each source. A simpler method is shown in Figure 5.

With reference to Figure 5, N is the total number of light sources in the device of the invention. The letter "i" is the program counter. Beginning with i = 1, i.e., the first light source, each source, in sequence, illuminates a specimen and the reflected energy is read by the single detector 17 (see Figure 3). The

6

reflectance associated with each source is compared to a preset window of values and the input to each source adjusted accordingly to increase or decrease light output. The procedure is repeated for the second light source (i = 2), the third light source (i = 3), and so on, for i = N light sources. This procedure can be readily carried out by including in the device a solid state logic circuit that can be readily designed by one skilled in the art and a conventional controller for regulating the input to each light source. Precision is increased by using a single detector in this way for all reflectance measurements, because the variation in responsivity of detectors is small compared to variation in output among light sources. This increase in precision is achieved at no additional cost and without an increase in the size of the device.

Another advantage of this embodiment is that in matching reflected energy, compensation is made for all components in the optical path, not only the light source, which might preferentially affect output of one or more light sources.

In addition, sensitivity of the reflectance measurement to twisting or inclination of the specimen is minimized by matching the reflected energy due to each source. For instance, with a single light source, rotation or inclination of the specimen will result in an increase or decrease in the total reflected energy reaching the detector, depending upon the direction of movement relative to the detector. Because this change in reflected energy has no relation to the color of the specimen, the rotation introduces an error in the reflectance measurement. A similar error is introduced if a pair of light sources is employed and the contribution of one light source to the total reflected energy is much greater than the other light source. If, however, both light sources in the pair contribute essentially equal amounts of reflected energy, as the sample rotates, the contribution from one light source decreases and the contribution from the other source proportionally increases so that the total energy received by the detector is essentially constant. Thus, it is important to match the contribution of each light source to the total reflected energy received by the detector since only reflected energy takes the sample characteristics into account.

Still other advantages in matching reflected energy of the light sources in a light source pair is that sensitivity to variations in the distance between the light source and specimen is minimized and matching the light sources produces an averaging effect; any characteristic of the light sources is averaged by employing multiple, matched light sources. For example, if the prescribed wavelength for a pair of light sources is 557 nm, but one source actually operates at 560 nm and the other at 554 nm, the average wavelength of reflected energy will be 557 nm if the light sources are balanced so that each source makes an equal contribution to the total reflected energy. If the light sources are not balanced, then the wavelength of the reflected energy will be biased toward the wavelength of the brighter source.

The photodetector is selected so that it will respond over the range of wavelengths of light reflecting from the specimen or emitted by the light sources and reflected by the sample under the test conditions. The photodetector should have high sensitivity to the light and fast enough response time to accommodate the data rate being used. In the preferred device of this invention, the photodetector is responsive to light having wavelengths in the range of about 500 to about 700 nm at about 25° C. The photodetector is preferably a silicon photodiode operated in the photovoltaic mode.

The light detector is fixed in a position so that its optical axis substantially coincides with the longitudinal axis of the reflected beam. This will ensure efficient collection of the reflected beam by the detector. The detector will generally be placed in close proximity to the surface of the specimen under test in order to minimize transmission losses as the reflected beam travels between the specimen and the detector. In some cases, however, such as where space is limited, the detector can be spaced farther away from the specimen by selecting a detector having a larger viewing area or by incorporating light guiding means between the specimen and detector. The detector can be moved to permit scanning of the surface under test or for the measurement of reflectance from a different area of the specimen. Similarly, movement of the detector can be coordinated with movement of the specimen.

While the embodiment of the invention has been described in terms of a light source capable of producing monochromatic light, it will be understood that the invention can also be practiced with a light source capable of producing polychromatic light and means for separating all but the light of substantially one wavelength from the reflected beam (15 in Figure 6) so that diffuse monochromatic light having the characteristics previously described activates the detector or is received in the detector. This can be accomplished, for example, by employing a monochromatic detector or by interposing a suitable optical filter in the path of the reflected beam between the specimen and the detector.

Processing of the signal will now be described with reference to Figure 6 depicting apparatus employed with the preferred silicon photodiode detector operated in the photovoltaic mode. Light sources 9 and 10 directly illuminate the surface 2 of specimen 1, and reflected beam 15 is collected by photodiode 17. The photodiode 17 produces a current 29 that is fed to an operational amplifier 30 used as a high gain current to voltage converter. The photodiode 17 and operational amplifier 30 are connected such that higher levels of illumination produce less positive voltage levels.

Analog to digital conversion of voltage output 31 from the operational amplifier 30 is accomplished in analog to digital converter 32 by a dual ramp integration technique. The signal voltage 31 is applied to an integrator for a time period that is a fixed number of microprocessor clock cycles --- 50 milliseconds (msec) in the preferred embodiment. This is achieved via microprocessor 34 and timer 35. A reference voltage 33 of opposite polarity is then applied. Clock cycles are counted until the integrator voltage drops below a threshold as detected by a comparator (not shown). When this time interval is ratioed to the fixed integration time, the value obtained represents the proportion of signal to the reference and the value is termed "counts." An offset value is first measured by reading "counts" with no illumination on the specimen 1. With the light sources 9 and 10 turned on, "counts" are first read from a standard specimen of known reflectance and second, from the unknown specimen. Reflectance is then calculated in microprocessor 34 from the following formula:

$$\frac{\text{COUNTS(unknown)} - \text{COUNTS(offset)}}{\text{COUNTS(standard)} - \text{COUNTS(offset)}} \times \text{Reflectance of Standard}$$

The calculated reflectance value can then be compared with reflectance values for specimens of known color and the desired analysis displayed in a permanent or transient state.

Referring to Figure 3, not all of the pairs need to be energized for all types of specimens. For example, only two of the light source pairs in Figure 3 may be energized and reflectance measurements based on the resulting signals generated. If all of the pairs are sequentially energized and reflectance measured for all the pairs, not all of the resulting measurements need to be employed in the analysis. This permits wide flexibility in programming the device of this invention to make measurements on specimens of different types, such as specimens that respond to only some of the wavelengths of light emanating from the light sources.

The device of this invention is capable of making very accurate and reproducible light reflectance measurements on optically nonuniform specimens. Thus, the device and method of this invention can be used to measure the concentration or presence of a substance on a reagent test strip by determining the tone of coloration by instrumental analysis. It will be apparent from the foregoing discussion and the Figures that the surface of the specimen is lighted by substantially uniform, direct illumination; that is, there is no diffusion apparatus or mechanism between the light source and the specimen. Thus, it is not necessary to obtain perfectly diffuse illumination of the surface under observation to obtain accurate analyses. The specimen can be illuminated at lower cost and with smaller size by elimination of an integrating sphere or hemisphere and by greater magnitude of illumination for equivalent sources. The amount of illumination lost between the light source and specimen and the amount of power consumed are minimized. In addition, slight variations in the orientation of the specimen in the specimen holder and in the distance between the light source and specimen can be tolerated.

## Claims

1. A device for measuring light diffusely reflected from a specimen (1), the device comprising light sources (9, 10) arranged at different positions around the specimen (1) for directly illuminating the specimen (1) at different azimuth angles by light beams which are coincident on a surface of said specimen (1), said light sources being arranged in pairs, with one source of each pair spaced from the other with the specimen therebetween, the sources in each pair emitting light of the same substantially monochromatic wavelengths, light responsive means (17) for detecting light, in the wavelength range of light emitted from the sources, from said beams reflected from said surface and having an optical axis substantially perpendicular to the surface of the specimen (1) for the detection of the diffusely reflected light by producing an electrical signal in response to the illumination of the specimen (1) by the light sources (9, 10), means for simultaneously energizing the light sources of each pair for predetermined periods of time and for energizing pairs in sequence, means (30, 31, 34, 35) for comparing said electrical signal with corresponding values of a specimen of known reflectance and computing the reflectance from said specimen, and means for reporting the resulting computed reflectance, characterized by

means (6, 7, 8) for holding an optically nonuniform specimen (1), having an irregularly reflecting surface with regard to the azimuth angle, in a fixed position;

8

EP 0 165 535 B1

said first and second light sources (9, 10) of a respective pair being about 179° to about 181° apart in azimuth;

said light sources (9, 10) being capable of emitting said monochromatic light within a wavelength range of from about 550 nm to about 940 nm;

and each of said light sources of a respective pair having a longitudinal axis that forms an acute angle with said surface, the acute angles being substantially equal;

said energising means (23, 24, 27, 28) simultaneously energising said light sources of each pair for periods not exceeding about 300 milliseconds and then deenergizing each of said light sources of said pair to obtain said incident beams having substantially equal duration;

and means for controlling the inputs to the first and second light sources of a respective pair to maintain a substantially equal reflected energy of said incident beams, the difference in the reflected energy of said incident beams being within ±2.5%.

2. The device of Claim 1, wherein said acute angles are about 40° to about 50°.

3. The device according to Claim 1, wherein said acute angles are about 44° to about 46°.

**Revendications**

1. Dispositif pour mesurer la lumière réfléchie de manière diffuse par un échantillon (1), dispositif comprenant des sources lumineuses (9, 10) placées à des positions différentes autour de l'échantillon (1) pour l'éclairement direct de l'échantillon (1) à des angles azimutaux différents par des faisceaux lumineux qui sont coïncidents sur une surface dudit échantillon (1), lesdites sources lumineuses étant disposées par paires, une source de chaque paire étant séparée de l'autre par l'échantillon, les sources de chaque paire émettant une lumière de mêmes longueurs d'ondes pratiquement monochromatiques, des moyens (17) sensibles à la lumière pour la détection de la lumière, dans la plage des longueurs d'ondes de la lumière émise par les sources, provenant desdits faisceaux réfléchis par ladite surface et ayant un axe optique pratiquement perpendiculaire à la surface de l'échantillon (1) pour la détection de la lumière réfléchie de manière diffuse par production d'un signal électrique en réponse à l'éclairement de l'échantillon (1) par les sources de lumière (9, 10), des moyens pour alimenter simultanément les sources lumineuses de chaque paire pendant des temps prédéterminés et pour alimenter les paires en série, des moyens (30, 31, 34, 35) pour comparer ledit signal électrique aux valeurs correspondantes d'un échantillon de réflectance connue et pour calculer la réflectance dudit échantillon, ainsi que des moyens pour enregistrer la réflectance calculée résultante, caractérisé en ce qu'il comprend

des moyens (6, 7, 8) pour le maintien d'un échantillon optiquement non uniforme (1), ayant une surface irrégulièrement réfléchissante par rapport à l'angle azimutal, dans une position fixe ;

lesdites première et seconde sources lumineuses (9, 10) d'une paire respective étant séparées par un angle azimutal d'environ 179° à environ 181° ;

lesdites sources lumineuses (9, 10) étant capables d'émettre ladite lumière monochromatique dans une plage de longueurs d'ondes d'environ 550 nm à environ 940 nm ;

et chacune desdites sources lumineuses d'une paire respective ayant un axe longitudinal qui forme un angle aigu avec ladite surface, les angles aigus étant pratiquement égaux ;

lesdits moyens d'alimentation (23, 24, 27, 28) alimentant simultanément lesdites sources lumineuses de chaque paire pendant des temps n'excédant pas environ 300 millisecondes, puis interrompant l'alimentation de chacune desdites sources lumineuses de ladite paire pour parvenir à des durées pratiquement égales desdits faisceaux incidents ;

et des moyens pour ajuster les quantités d'énergie envoyées auxdites première et seconde sources lumineuses d'une paire respective pour maintenir des énergies réfléchies pratiquement égales desdits faisceaux incidents, la différence entre les énergies réfléchies desdits faisceaux incidents étant comprise dans l'intervalle de ±2,5%.

2. Dispositif suivant la revendication 1, dans lequel les angles aigus sont compris dans l'intervalle d'environ 40° à environ 50°.

3. Dispositif suivant la revendication 1, dans lequel les angles aigus sont compris dans l'intervalle d'environ 44° à environ 46°.

**Patentansprüche**

9

1. Vorrichtung zur Messung des Streureflexionslichtes an einem Prüfling (1), bei der vorgesehen sind: Lichtquellen (9, 10), die an verschiedenen Positionen um den Prüfling (1) zur direkten Beleuchtung des Prüflings (1) unter verschiedenen Azimuthwinkeln angeordnet sind, wobei sich die Lichtstrahlen auf der Oberfläche des Prüflings (1) treffen, die Lichtquellen zu Paaren angeordnet sind, wobei eine Lichtquelle jeweils eines Paares in einem Abstand von der anderen mit dem Prüfling dazwischen angeordnet ist, jeweils ein Lichtquellenpaar Licht von derselben im wesentlichen monochromatischen Wellenlänge emittiert, lichtempfindliche Einrichtung (17) zum Lichtnachweis, im Wellenlängenbereich des von den Quellen emittierten Lichts, der Strahlen, die von der Oberfläche reflektiert werden und eine im wesentlichen senkrecht zur Oberfläche des Prüflings (1) ausgerichtete optische Achse aufweisen zum Nachweis des Streureflexionslichts durch Erzeugung eines elektrischen Signals als Reaktion auf die Beleuchung des Prüflings (1) durch die Lichtquellen (9, 10), Einrichtung zur gleichzeitigen Anschaltung der Lichtquellen eines jeden Paares für eine bestimmte Zeitdauer und zur Anschaltung der Paare in Folge, Einrichtungen (30, 31, 34, 35) zum Vergleich der elektrischen Signale mit den entsprechenden Werten eines Prüflings mit bekannter Reflexion und zur Berechnung der Reflexion vom Prüfling, und Einrichtung zur Aufzeichnung der erhaltenen berechneten Reflexion, dadurch gekennzeichnet, daß
die Einrichtungen (6, 7, 8) für die Halterung eines optisch nicht einheitlichen Prüflings (1) mit einer unregelmäßigen reflektierten Oberfläche, in bezug auf den Azimuthwinkel in einer fixierten Stellung angeordnet sind;
die erste und zweite Lichtquelle (9, 10) eines jeweiligen Paares zwischen 179˚ und 181˚ im Azimuth auseinander liegen;
die Lichtquellen (9, 10) zur Emission des monochromatischen Lichts innerhalb eines Wellenlängenbereichs von ca. 550 nm bis ca. 940 nm in der Lage sind;
und jeweils eine Lichtquelle eines jeweiligen Paares eine Längsachse hat, die einen spitzen Winkel mit der Oberfläche bildet und die spitzen Winkel im wesentlichen gleich sind;
die Anschalteinrichtungen (23, 24, 27, 28) gleichzeitig die Lichtquellen eines jeden Paares für einen ca. 300 Millisekunden nicht überschreitenden Zeitraum anschalten und anschließend jeweils die Lichtquellen eines Paares abschalten, wobei Einfallstrahlen mit im wesentlichen gleicher Dauer erreicht werden;
und Kontrolleinrichtungen für die Speisung der ersten und zweiten Lichtquelle eines jeweiligen Paares um eine im wesentlichen gleiche Reflexionsenergie der Einfallstrahlen aufrechtzuerhalten, wobei der Unterschied der Reflexionsenergie der Einfallstrahlen innerhalb ± 2,5 % liegt.

2. Vorrichtung nach Anspruch 1, worin die spitzen Winkel zwischen 40˚ und 50˚ sind.

3. Vorrichtung nach Anspruch 1, worin die spitzen Winkel wischen 44˚ und 46˚ sind.

FIG.1

FIG.2

FIG.3

FIG.4

FIG.5

FIG. 6